# FASCICULE DE BREVET EUROPEEN

(11) **EP 2 595 296 B1**
(45) Date de publication et mention de la délivrance du brevet: **28.01.2015**
(21) Numéro de dépôt: 12186127.2
(22) Date de dépôt: 26.09.2012
(51) Int. Cl.: H02M 7/00

(54) **Système de commande comportant un module onduleur employé comme redresseur actif**
Steuersystem, das ein Wechselrichtermodul umfasst, das als aktiver Gleichrichter verwendet wird
Control system comprising an inverter module used as an active rectifier

(30) Priorité: 05.10.2011 FR 1158965
(43) Date de publication de la demande: 22.05.2013
(73) Titulaire: Schneider Toshiba Inverter Europe SAS, 27120 Pacy sur Eure (FR)
(72) Inventeur: Barauna, Allan Pierre, 27200 Vernon (FR)
(74) Mandataire: Bié, Nicolas

(56) Documents cités:
- EP-A1- 2 184 843
- GB-A- 2 257 310

## Description

### Domaine technique de l'invention

La présente invention se rapporte à un système de commande comportant un variateur de vitesse dont le module onduleur est employé comme redresseur actif pour un autre variateur de vitesse.

### Etat de la technique

De manière connue, un variateur de vitesse est destiné à commander une charge électrique et comporte :
- un module redresseur connecté à une source d'alimentation électrique,
- un bus continu d'alimentation connecté au module redresseur comportant une première ligne d'alimentation positive et une deuxième ligne d'alimentation négative,
- un condensateur de bus connecté à la ligne d'alimentation positive et à la ligne d'alimentation négative,
- un module onduleur connecté au bus continu d'alimentation et doté de plusieurs bras de commutation commandés pour fournir une tension variable à la charge électrique,
- une résistance de limitation, appelée également résistance de précharge, connectée en série sur la première ligne d'alimentation ou sur la deuxième ligne d'alimentation du bus continu d'alimentation, entre le module redresseur et le condensateur de bus, et destinée à limiter le courant de charge du condensateur de bus.

Le module redresseur peut être un simple pont de diodes ou peut comporter, comme le module onduleur, plusieurs bras de commutation dotés de transistors. Dans ce dernier cas, on dit que le variateur de vitesse est à redresseur actif, voir, par exemple, le document EP 2184843. Si on ne dispose pas d'un variateur de vitesse intégrant d'origine un module redresseur actif, il est connu d'associer deux variateurs de vitesse classiques en connectant le module onduleur du premier variateur de vitesse à la source d'alimentation électrique pour former le module redresseur actif et de connecter le module onduleur du deuxième variateur de vitesse au bus continu d'alimentation du premier variateur de vitesse pour former le module onduleur. Cependant, dans cette configuration, la résistance de limitation se trouve être connectée en aval du condensateur de bus par rapport à la source d'alimentation électrique et ne peut donc remplir son rôle de limitation lors de la charge du condensateur de bus. Pour résoudre le problème, une résistance supplémentaire est habituellement connectée entre la source d'alimentation électrique et le module onduleur du premier variateur de vitesse pour assurer la limitation du courant lors de la charge du condensateur de bus, puis est court-circuitée par un contacteur une fois que la charge du condensateur de bus est terminée.

Le but de l'invention est donc de proposer un système de commande comportant un variateur de vitesse dans lequel le module onduleur est employé comme module redresseur actif et dans lequel la charge du condensateur de bus se produit avec un courant limité sans employer une résistance de limitation supplémentaire.

### Exposé de l'invention

Ce but est atteint par un système de commande qui comporte :
- un premier variateur de vitesse comprenant :
   - des phases d'entrée,
   - un premier module redresseur comportant un pont de diodes connecté aux phases d'entrée,
   - un premier bus continu d'alimentation comportant une première ligne d'alimentation et une deuxième ligne d'alimentation,
   - un premier condensateur de bus connecté à la première ligne d'alimentation et à la deuxième ligne d'alimentation,
   - un premier module onduleur comportant plusieurs bras de commutation dotés chacun d'au moins deux transistors,
   - des premières phases de sortie connectées au premier module onduleur,
   - une résistance de limitation connectée en série sur la première ligne d'alimentation ou la deuxième ligne d'alimentation, entre le module redresseur et le condensateur de bus,
   - une source d'alimentation électrique,
   - un deuxième module onduleur connecté en parallèle du condensateur de bus et comportant plusieurs bras de commutation dotés chacun d'au moins deux transistors,
   - des deuxièmes phases de sortie destinées à relier le deuxième module onduleur à une charge électrique,
   - des moyens de sélection agencés pour connecter la source d'alimentation électrique soit aux phases d'entrée du premier variateur de vitesse, soit aux premières phases de sortie du premier variateur de vitesse.

Selon une particularité, ce système comporte un deuxième variateur de vitesse comprenant le deuxième module onduleur.

Selon une autre particularité, les moyens de sélection comprennent un ou plusieurs contacteurs commandés par des moyens de commande dans un premier état lors de la charge du condensateur de bus et dans un deuxième état une fois que la charge du condensateur de bus est terminée.

Le but de l'invention est également atteint par un système de commande qui comporte :
- un premier variateur de vitesse comprenant :
   - des phases d'entrée,
   - un premier module redresseur comportant un pont de diodes connecté aux phases d'entrée,
   - un premier bus continu d'alimentation,
   - un premier condensateur de bus connecté à la première ligne d'alimentation et à la deuxième ligne d'alimentation,
   - un premier module onduleur comportant plusieurs bras de commutation dotés chacun d'au moins deux transistors,
   - plusieurs phases de sortie connectées au premier module onduleur,
- un deuxième variateur de vitesse comprenant :
   - des phases d'entrée,
   - un deuxième module redresseur comportant un pont de diodes connecté aux phases d'entrée,
   - un deuxième bus continu d'alimentation connecté en parallèle du premier bus continu d'alimentation et comportant une première ligne d'alimentation et une deuxième ligne d'alimentation,
   - un deuxième condensateur de bus connecté à la première ligne d'alimentation et à la deuxième ligne d'alimentation,
   - un deuxième module onduleur comportant plusieurs bras de commutation dotés chacun d'au moins deux transistors,
   - des phases de sortie reliant le deuxième module onduleur à une charge électrique,
   - une résistance de limitation connectée en série sur la première ligne d'alimentation ou la deuxième ligne d'alimentation, entre le deuxième module redresseur et le condensateur de bus,
- une source d'alimentation électrique,
- des moyens de sélection agencés pour connecter la source d'alimentation électrique soit aux phases d'entrée du deuxième variateur de vitesse, soit aux phases de sortie du premier variateur de vitesse.

Selon une particularité, les moyens de sélection comprennent un ou plusieurs contacteurs commandés par des moyens de commande dans un premier état lors de la charge des condensateurs de bus et dans un deuxième état une fois que la charge des condensateurs de bus est terminée.

Selon l'invention, dans chacun des systèmes de commande décrits ci-dessus, les phases de sortie du premier variateur de vitesse peuvent comporter des inductances de ligne.

### Brève description des figures

D'autres caractéristiques et avantages vont apparaître dans la description détaillée qui suit faite en regard des dessins annexés dans lesquels :
- la figure 1 représente une première variante de réalisation du système de commande de l'invention,
- la figure 2 représente une deuxième variante de réalisation du système de commande de l'invention.

### Description détaillée d'au moins un mode de réalisation

Dans la description ci-dessous, on considérera qu'un variateur de vitesse comporte les éléments principaux suivants :
- Plusieurs phases d'entrée R1, S1, T1, R2, S2, T2 destinées à être connectées à une source 1 d'alimentation électrique fournissant une tension alternative. Comme représenté sur les figures, un variateur de vitesse comporte par exemple trois phases d'entrée.
- Un module redresseur Rec1, Rec2 connecté aux trois phases d'entrée. Le module redresseur Rec1, Rec2 comporte en règle générale un pont de diodes doté d'un bras par phase, avec au moins deux diodes par bras. Le module redresseur Rec1, Rec2 est destiné à transformer la tension alternative fournie par la source 1 d'alimentation électrique en une tension redressée.
- Un bus continu d'alimentation connecté au module redresseur Rec1, Rec2 sur lequel est appliquée la tension redressée par le module redresseur. Le bus continu d'alimentation comporte une première ligne d'alimentation L1, L2 et une deuxième ligne d'alimentation L10, L20, l'une étant à un potentiel positif et l'autre à un potentiel négatif.
- Un condensateur de bus Cbus1, Cbus2 connecté à la première ligne d'alimentation et à la deuxième ligne d'alimentation. Le condensateur de bus Cbus1, Cbus2 est employé pour maintenir la tension du bus continu d'alimentation à une valeur constante.
- Un module onduleur Inv1, Inv2 connecté au bus continu d'alimentation et comportant plusieurs bras de commutation, chaque bras de commutation comportant aux moins deux transistors. Les transistors sont par exemple de type IGBT. Le module onduleur est commandé pour hacher la tension appliquée sur le bus continu d'alimentation en vue de fournir une tension variable à une charge électrique C.
- Plusieurs phases de sortie U1, V1, W1, U2, V2, W2 connectées chacune à un point milieu d'un bras de commutation du module onduleur Inv1, Inv2. Les phases de sortie sont habituellement connectées à une charge électrique C. Comme représenté sur les figures, un variateur de vitesse comporte par exemple trois phases de sortie. Elles peuvent comporter des inductances de ligne 4 et éventuellement un filtre CEM 3.
- Une résistance de limitation RL1, RL2, appelée également résistance de précharge, connectée en série sur la première ligne d'alimentation ou sur la deuxième ligne d'alimentation du bus continu d'alimentation, entre le module redresseur et le condensateur de bus, et destinée à limiter le courant de charge du condensateur de bus Cbus1, Cbus2.

Si l'on ne dispose pas d'un variateur de vitesse intégrant d'origine un module redresseur actif, il est connu de réaliser un système dans lequel on connecte un module onduleur Inv1 d'un premier variateur de vitesse Var1 tel que décrit ci-dessus à une source d'alimentation électrique (via les inductances de ligne 4 et éventuellement le filtre CEM 3) pour former un module redresseur actif, et un module onduleur Inv2 d'un deuxième variateur de vitesse Var2 tel que décrit ci-dessus au bus continu d'alimentation du premier variateur de vitesse Var1 pour former un module onduleur. En connectant ainsi deux variateurs de vitesse Var1, Var2, par exemple identiques, on obtient alors un système de commande à redresseur actif.

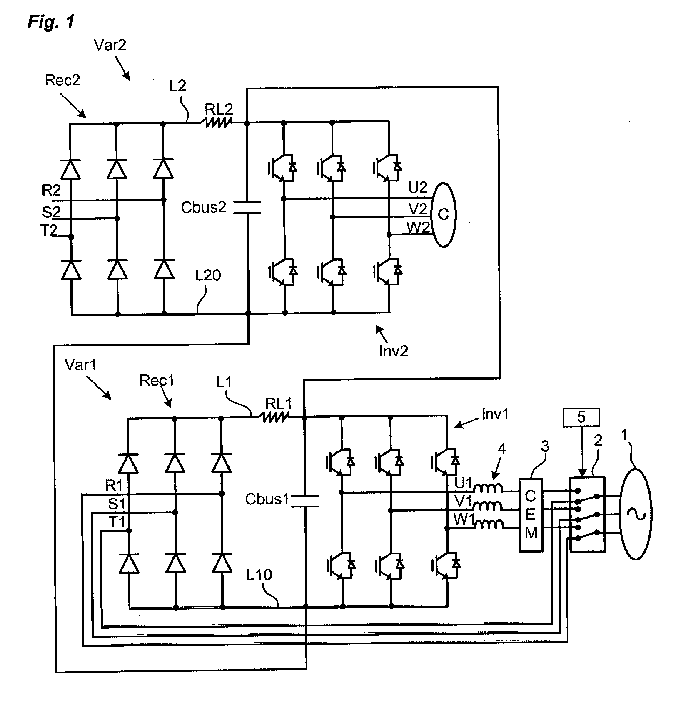

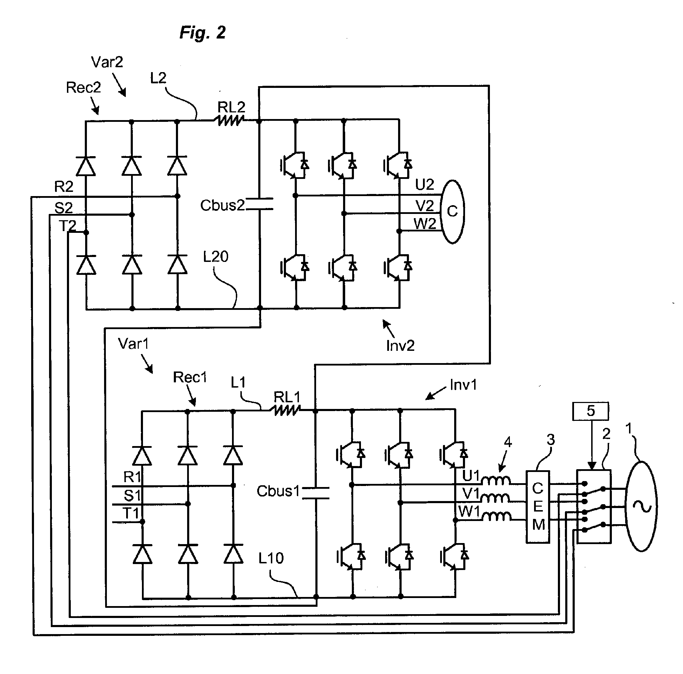

En référence aux figures 1 et 2, le système de commande de l'invention comporte ainsi deux variateurs de vitesse Var1, Var2 tels que décrits ci-dessus. La source 1 d'alimentation électrique est connectée aux phases de sortie U1, V1, W1 du premier variateur de vitesse Var1. Les phases de sortie peuvent comporter des inductances de lignes 4 et éventuellement un filtre CEM 3. Le module onduleur Inv2 du deuxième variateur de vitesse Var2 est connecté aux bornes du condensateur de bus Cbus1 du premier variateur de vitesse Var1 de sorte que les deux bus continus d'alimentation sont connectés en parallèle. Les phases de sortie U2, V2, W2 du deuxième variateur de vitesse Var2 sont alors connectées à une charge électrique à commander.

En connectant les phases de sortie U1, V1, W1 du premier variateur de vitesse Var1 sur la source 1 d'alimentation électrique pour que le module onduleur Inv1 du premier variateur de vitesse Var1 soit employé comme redresseur actif, il se pose un problème lors de la charge des condensateurs de bus Cbus1, Cbus2. En effet, dans la configuration décrite, ni la résistance de limitation RL1 du premier variateur de vitesse Var1, ni celle (RL2) du deuxième variateur de vitesse Var2 ne se trouve dans le circuit de précharge des condensateurs de bus.

Selon l'invention, pour résoudre ce problème, le système comporte également des moyens de sélection 2 destinés à connecter la source 1 d'alimentation électrique soit au circuit de précharge des condensateurs de bus Cbus1, Cbus2, soit aux phases de sortie U1, V1, W1 du premier variateur Var1. Le circuit de précharge comporte une résistance de limitation RL1 ou RL2 de l'un des deux variateurs de vitesse. Les moyens de sélection 2 sont par exemple composés d'un ou plusieurs contacteurs commandés entre deux états par des moyens de commande 5.

Dans la première variante de réalisation représentée en figure 1, les moyens de sélection 2 sont destinés à connecter la source d'alimentation 1 soit aux phases d'entrée R1, S1, T1 du premier variateur de vitesse Var1, soit aux phases de sortie U1, V1, W1 du premier variateur de vitesse Var1. Lors du démarrage du système, les moyens de sélection sont dans un premier état, dans lequel la source 1 d'alimentation électrique est connectée aux phases d'entrée R1, S1, T1 du premier variateur de vitesse Var1, permettant au courant de traverser le module redresseur Rec1 du premier variateur de vitesse Var1 et la résistance de limitation RL1 du premier variateur de vitesse pour charger les deux condensateurs de bus Cbus1, Cbus2 lors du démarrage du système. Une fois que la charge des condensateurs est terminée, les moyens de sélection 2 basculent dans leur deuxième état, dans lequel la source 1 d'alimentation électrique est connectée aux phases de sortie U1, V1, T1 du premier variateur de vitesse Var1, le module onduleur Inv1 du premier variateur de vitesse étant alors commandé pour fonctionner comme un module redresseur actif.

Dans la deuxième variante de réalisation représentée en figure 2, les moyens de sélection 2 sont destinés à connecter la source 1 d'alimentation électrique soit aux phases d'entrée R2, S2, T2 du deuxième variateur de vitesse Var2, soit aux phases de sortie U1, V1, W1 du premier variateur de vitesse Var1. Lors du démarrage du système, les moyens de sélection 2 sont dans un premier état, dans lequel la source 1 d'alimentation électrique est connectée aux phases d'entrée R2, S2, T2 du deuxième variateur de vitesse Var2, permettant au courant de traverser le module redresseur Rec2 du deuxième variateur de vitesse et la résistance de limitation RL2 du deuxième variateur de vitesse pour charger les condensateurs de bus. Une fois la charge des condensateurs de bus terminée, les moyens de sélection 2 basculent dans leur deuxième état, dans lequel la source d'alimentation est connectée aux phases de sortie U1, V1, W1 du premier variateur de vitesse Var1, le module onduleur Inv1 du premier variateur de vitesse étant alors commandé pour fonctionner comme un module redresseur actif.

## Revendications

1. Système de commande comportant :
- un premier variateur de vitesse (Var1) comprenant :
- des phases d'entrée (R1, S1, T1),
- un premier module redresseur (Rec1) comportant un pont de diodes connecté aux phases d'entrée,
- un premier bus continu d'alimentation comportant une première ligne d'alimentation (L1) et une deuxième ligne d'alimentation (L10),
- un premier condensateur de bus (Cbus1) connecté à la première ligne d'alimentation et à la deuxième ligne d'alimentation,
- un premier module onduleur (Inv1) comportant plusieurs bras de commutation dotés chacun d'au moins deux transistors,
- des premières phases de sortie (U1, V1, W1) connectées au premier module onduleur,
- une résistance de limitation (RL1) connectée en série sur la première ligne d'alimentation ou la deuxième ligne d'alimentation, entre le module redresseur et le condensateur de bus,
- une source (1) d'alimentation électrique,
- un deuxième module onduleur (Inv2) connecté en parallèle du condensateur de bus (Cbus1) et comportant plusieurs bras de commutation dotés chacun d'au moins deux transistors,
- des deuxièmes phases de sortie (U2, V2, W2) destinées à relier le deuxième module onduleur (Inv2) à une charge électrique (C),
**caractérisé en ce que** le système comporte :
- des moyens de sélection (2) agencés pour connecter la source (1) d'alimentation électrique soit aux phases d'entrée du premier variateur de vitesse (Var1), soit aux premières phases de sortie du premier variateur de vitesse.

2. Système de commande selon la revendication 1, **caractérisé en ce qu'il** comporte un deuxième variateur de vitesse (Var2) comprenant le deuxième module onduleur (Inv2).

3. Système de commande selon l'une des revendication 1 ou 2, **caractérisé en ce que** les moyens de sélection (2) comprennent un ou plusieurs contacteurs commandés par des moyens de commande (5) dans un premier état lors de la charge du condensateur de bus et dans un deuxième état une fois que la charge du condensateur de bus est terminée.

4. Système de commande comportant :
- un premier variateur de vitesse (Var1) comprenant :
- des phases d'entrée (R1, S1, T1),
- un premier module redresseur (Rec1) comportant un pont de diodes connecté aux phases d'entrée,
- un premier bus continu d'alimentation,
- un premier condensateur de bus (Cbus1) connecté à la première ligne d'alimentation et à la deuxième ligne d'alimentation,
- un premier module onduleur (Inv1) comportant plusieurs bras de commutation dotés chacun d'au moins deux transistors,
- plusieurs phases de sortie (U1, V1, W1) connectées au premier module onduleur,
- un deuxième variateur de vitesse (Var2) comprenant :
- des phases d'entrée (R2, S2, T2),
- un deuxième module redresseur (Rec2) comportant un pont de diodes connecté aux phases d'entrée,
- un deuxième bus continu d'alimentation connecté en parallèle du premier bus continu d'alimentation et comportant une première ligne d'alimentation (L2) et une deuxième ligne d'alimentation (L20),
- un deuxième condensateur de bus (Cbus2) connecté à la première ligne d'alimentation et à la deuxième ligne d'alimentation,
- un deuxième module onduleur (Inv2) comportant plusieurs bras de commutation dotés chacun d'au moins deux transistors,
- des phases de sortie (U2, V2, W2) reliant le deuxième module onduleur (Inv2) à une charge électrique (C),
- une résistance de limitation (RL2) connectée en série sur la première ligne d'alimentation ou la deuxième ligne d'alimentation, entre le deuxième module redresseur (Rec2) et le condensateur de bus (Cbus2),
- une source (1) d'alimentation électrique,
**caractérisé en ce que** le système comporte :
- des moyens de sélection (2) agencés pour connecter la source d'alimentation électrique soit aux phases d'entrée du deuxième variateur de vitesse (Var2), soit aux phases de sortie du premier variateur de vitesse (Var1).

5. Système de commande selon la revendication 4, **caractérisé en ce que** les moyens de sélection (2) comprennent un ou plusieurs contacteurs commandés par des moyens de commande (5) dans un premier état lors de la charge des condensateurs de bus et dans un deuxième état une fois que la charge des condensateurs de bus est terminée.

6. Système de commande l'une des revendications 1 à 5, **caractérisé en ce que** les phases de sortie du premier variateur de vitesse (Var1) comportent des inductances de ligne (4).

## Patentansprüche

1. Steuersystem, das Folgendes umfasst:
- eine erste Drehzahlverstelleinrichtung (Var1), die Folgendes umfasst:
- Eingangsphasen (R1, S1, T1),
- ein erstes Gleichrichtermodul (Rec1), das eine mit den Eingangsphasen verbundene Diodenbrücke enthält,
- einen ersten Gleichspannungsversorgungsbus, der eine erste Versorgungsleitung (L1) und eine zweite Versorgungsleitung (L10) enthält,
- einen ersten Buskondensator (Cbus1), der mit der ersten Versorgungsleitung und mit der zweiten Versorgungsleitung verbunden ist,
- ein erstes Wechselrichtermodul (Inv1), das mehrere Kommutationszweige enthält, wovon jeder mit wenigstens zwei Transistoren versehen ist,
- erste Ausgangsphasen (U1, V1, W1), die mit dem ersten Wechselrichtermodul verbunden sind,
- einen Begrenzungswiderstand (RL1), der zwischen dem Gleichrichtermodul und dem Buskondensator mit der ersten Versorgungsleitung oder der zweiten Versorgungsleitung verbunden ist,
- eine Stromversorgungsquelle (1),
- ein zweites Wechselrichtermodul (Inv2), das zu dem Buskondensator (Cbus1) parallel geschaltet ist und mehrere Kommutationszweige enthält, die jeweils mit wenigstens zwei Transistoren versehen sind,
- zweite Ausgangsphasen (U2, V2, W2), die dazu bestimmt sind, das zweite Wechselrichtermodul (Inv2) mit einer elektrischen Last (C) zu verbinden,
**dadurch gekennzeichnet, dass** das System Folgendes umfasst:
- Auswahlmittel (2), die dafür ausgelegt sind, die Stromversorgungsquelle (1) entweder mit den Eingangsphasen der ersten Drehzahlverstelleinrichtung (Var1) oder mit den ersten Ausgangsphasen der ersten Drehzahlverstelleinrichtung zu verbinden.

2. Steuersystem nach Anspruch 1, **dadurch gekennzeichnet, dass** es eine zweite Drehzahlverstelleinrichtung (Var2) umfasst, die das zweite Wechselrichtermodul (Inv2) enthält.

3. Steuersystem nach einem der Ansprüche 1 oder 2, **dadurch gekennzeichnet, dass** die Auswahlmittel (2) einen oder mehrere Kontaktgeber enthalten, die durch Steuermittel (5) in einen ersten Zustand gesteuert werden, wenn der Buskondensator geladen wird, und in einen zweiten Zustand gesteuert werden, sobald das Laden des Buskondensators beendet ist.

4. Steuersystem, das Folgendes umfasst:
- eine erste Drehzahlverstelleinrichtung (Var1), die Folgendes umfasst:
- Eingangsphasen (R1, S1, T1),
- ein erstes Gleichrichtermodul (Rec1), das eine mit den Eingangsphasen verbundene Diodenbrücke enthält,
- einen ersten Gleichspannungsversorgungsbus,
- einen ersten Buskondensator (Cbus1), der mit der ersten Versorgungsleitung und mit der zweiten Versorgungsleitung verbunden ist,
- ein erstes Wechselrichtermodul (Inv1), das mehrere Kommutationszweige enthält, wovon jeder mit wenigstens zwei Transistoren versehen ist,
- mehrere Ausgangsphasen (U1, V1, W1), die mit dem ersten Wechselrichtermodul verbunden sind,
- eine zweite Drehzahlverstelleinrichtung (Var2), die Folgendes umfasst:
- Eingangsphasen (R2, S2, T2),
- ein zweites Gleichrichtermodul (Rec2), das eine mit den Eingangsphasen verbundene Diodenbrücke enthält,
- einen zweiten Gleichspannungsversorgungsbus, der zu dem ersten Gleichspannungsversorgungsbus parallel geschaltet ist und eine erste Versorgungsleitung (L2) und eine zweite Versorgungsleitung (L20) enthält,
- einen zweiten Buskondensator (Cbus2), der mit der ersten Versorgungsleitung und mit der zweiten Versorgungsleitung verbunden ist,
- ein zweites Wechselrichtermodul (Inv2), das mehrere Kommutationszweige enthält, die jeweils mit wenigstens zwei Transistoren versehen sind,
- Ausgangsphasen (U2, V2, W2), die das zweite Wechselrichtermodul (Inv2) mit einer elektrischen Last (C) verbinden,
- einen Begrenzungswiderstand (RL2), der zwischen dem zweiten Gleichrichtermodul (Rec2) und dem Buskondensator (Cbus2) mit der ersten Versorgungsleitung oder mit der zweiten Versorgungsleitung in Reihe geschaltet ist,
- eine Stromversorgungsquelle (1),
**dadurch gekennzeichnet, dass** das System Folgendes umfasst:
- Auswahlmittel (2), die dafür ausgelegt sind, die Stromversorgungsquelle entweder mit den Eingangsphasen der zweiten Drehzahlverstelleinrichtung (Var2) oder mit den Ausgangsphasen der ersten Drehzahlverstelleinrichtung (Var1) zu verbinden.

5. Steuersystem nach Anspruch 4, **dadurch gekennzeichnet, dass** die Auswahlmittel (2) einen oder mehrere Kontaktgeber umfassen, die durch Steuermittel (5) in einen ersten Zustand gesteuert werden, wenn die Buskondensatoren geladen werden, und in einen zweiten Zustand gesteuert werden, sobald das Laden der Buskondensatoren beendet ist.

6. Steuersystem nach einem der Ansprüche 1 bis 5, **dadurch gekennzeichnet, dass** die Ausgangsphasen der ersten Drehzahlverstelleinrichtung (Var1) Leitungsinduktivitäten (4) aufweisen.

## Claims

1. Control system including:
- a first variable speed drive (Var1) comprising:
- input phases (R1,S1,T1),
- a first rectifier module (Rec1) including a diode bridge connected to the input phases,
- a first DC power bus including a first power line (L1) and a second power line (L10),
- a first bus capacitor (Cbus1) connected to the first power line and to the second power line,
- a first inverter module (Inv1) including a plurality of switching arms each provided with at least two transistors,
- first output phases (U1,V1,W1) connected to the first inverter module,
- a current-limiting resistor (RL1) connected in series to the first power line or the second power line, between the rectifier module and the bus capacitor,
- an electric power source (1),
- a second inverter module (Inv2) connected in parallel with the bus capacitor (Cbus1) and including a plurality of switching arms each provided with at least two transistors,
- second output phases (U2,V2,W2) intended to connect the second inverter module (Inv2) to an electrical load (C) ,
**characterized in that** the system includes:
- selection means (20) designed to connect the electric power source (1) either to the input phases of the first variable speed drive (Var1) or to the first output phases of the first variable speed drive.

2. Control system according to Claim 1, **characterized in that** it includes a second variable speed drive (Var2) comprising the second inverter module (Inv2).

3. Control system according to one of Claims 1 or 2, **characterized in that** the selection means (2) comprise one or more contactors that are put into a first state by control means (5) during the charging of the bus capacitor and into a second state once the charging of the bus capacitor is over.

4. Control system including:
- a first variable speed drive (Var1) comprising:
- input phases (R1,S1,T1),
- a first rectifier module (Rec1) including a diode bridge connected to the input phases,
- a first DC power bus,
- a first bus capacitor (Cbus1) connected to the first power line and to the second power line,
- a first inverter module (Inv1) including a plurality of switching arms each provided with at least two transistors,
- a plurality of output phases (U1,V1,W1) connected to the first inverter module,
- a second variable speed drive (Var2) comprising:
- input phases (R2,S2,T2),
- a second rectifier module (Rec2) including a diode bridge connected to the input phases,
- a second DC power bus connected in parallel with the first DC power bus and including a first power line (L2) and a second power line (L20),
- a second bus capacitor (Cbus2) connected to the first power line and to the second power line,
- a second inverter module (Inv2) including a plurality switching arms each provided with at least two transistors,
- output phases (U2,V2,W2) connecting the second inverter module (Inv2) to an electrical load (C),
- a current-limiting resistor (RL2) connected in series to the first power line or the second power line, between the second rectifier module (Rec2) and the bus capacitor (Cbus2),
- an electric power source (1),
**characterized in that** the system includes:
- selection means (2) designed to connect the electric power source either to the input phases of the second variable speed drive (Var2) or to the output phases of the first variable speed drive (Var1).

5. Control system according to Claim 4, **characterized in that** the selection means (2) comprise one or more contactors that are put into a first state by control means (5) during the charging of the bus capacitors and into a second state once the charging of the bus capacitors is over.

6. Control system according to one of Claims 1 to 5, **characterized in that** the output phases of the first variable speed drive (Var1) include line inductances (4).
